# EUROPEAN PATENT APPLICATION

(11) **EP 1 586 891 A2**
(43) Date of publication of application: **19.10.2005**
(21) Application number: 05008168.6
(22) Date of filing: 14.04.2005
(51) Int. Cl.: G01N 27/407

(54) **Improved structure of gas sensor ensuring stability of output insensitive to heat**

(30) Priority: 15.04.2004 JP 2004120682; 09.02.2005 JP 2005033158
(71) Applicant: DENSO CORPORATION, Kariya-city, Aichi-pref. 488-8661 (JP)
(72) Inventor: Toguchi, Kengo, Kariya-city Aichi-pref., 448-8661 (JP); Fukaya, Kenji, Kariya-city Aichi-pref., 448-8661 (JP)
(74) Representative: TBK-Patent

(57) **Abstract**

An improved structure of a gas sensor is provided which is designed to ensure the stability of a sensor output insensitive to thermal energy added to a sensor element. The sensor element has a sensing area located where a correct sensor output is produced free from heat added to the sensor element.

## Description

The present application claims the benefit of Japanese Patent Application No. 2004-120682 filed on April 15, 2004 and Japanese Paten Application No. 2005-33158 filed on February 9, 2005, the disclosures of which are incorporated herein by reference.

### BACKGROUND OF THE INVENTION

### Technical Field of the Invention

The present invention relates generally to a gas sensor which is installed, for example, in an exhaust system of automotive internal combustion engines to measure a given component of exhaust emissions for use in combustion control in the engine, and more particularly to an improved structure of such a gas sensor which is designed to ensure the stability of a sensor output free from thermal energy added to a sensor element.

### Background Art

There are known gas sensors which are installed in an exhaust system of an automotive engine to measure the concentration of oxygen (O₂) contained in exhaust emissions for use in determining an air-fuel ratio of a mixture for combustion control in the engine. A typical one of such a type of gas sensors is equipped with a sensor element and a heater. The sensor element consists of a cup-shaped solid electrolyte body with a closed top end, a measurement gas-exposed electrode, and a reference gas-exposed electrode. The solid electrolyte body has defined therein an air chamber into which surrounding air is admitted as a reference gas. The measurement gas-electrode is affixed to an outer surface of the solid electrolyte body and to be exposed to a gas to be measured. The reference gas-exposed electrode is affixed to an inner surface of the solid electrolyte body and to be exposed to the air in the air chamber. The heater is installed within the air chamber and energized electrically to heat the solid electrolyte body up to a desired temperature.

Producing a correct sensor output requires heating the body of the sensor element up to an activation temperature thereof. In order to accelerate the heating of the sensor element within a decreased time immediately after start-up of the engine, it has been proposed to place the heater in abutment with a portion of the solid electrolyte body within the air chamber close to the top end thereof which is usually subjected to intense heat of the exhaust gas of the engine. For example, Japanese Patent First Publication No. 11-153571 (US 6,354,134 B1) discloses the above type of gas sensor.

Recently, the temperature of exhaust gas of automotive engines has been increased in order to meet legal requirements of emission control. Additionally, the temperature of the heater has tended to be elevated in order to bring the sensor element into a condition to produce a correct sensor output within a decreased time after the start-up of the engine.

A sensing area of the sensor element which is sensitive to the gas to produce the sensor output is defined by an overlap between the measurement gas-exposed electrode and the reference gas-exposed electrode through the solid electrolyte body. When the sensing area of the sensor element is overheated by thermal energy of the exhaust gas or the heater, it may result in a decreased level of the sensor output.

### SUMMARY OF THE INVENTION

It is therefore a principal object of the invention to avoid the disadvantages of the prior art.

It is another object of the invention to provide an improved structure of a gas sensor which is designed to ensure the stability of output of a gas sensor insensitive to thermal energy of a gas to be measured or a heater installed in the gas sensor.

According to one aspect of the invention, there is provided a gas sensor working to measure a given component content in a gas. The gas sensor comprises: (a) a sensor element; and (b) a heater. The sensor element includes a cup-shaped solid electrolyte body having a length with a closed top end, a measurement gas-exposed electrode, and a reference gas-exposed electrode. The solid electrolyte body has defined therein an air chamber into which surrounding air is admitted as a reference gas. The measurement gas-exposed electrode is affixed to an outer surface of the solid electrolyte body which is to be exposed to a gas to be measured. The reference gas-exposed electrode is affixed to an inner surface of the solid electrolyte body which is to be exposed to the air admitted into the air chamber. The heater is installed within the air chamber of the solid electrolyte body of the sensor element in contact with the inner surface of the solid electrolyte body. The heater is designed to be electrically energized to heat the solid electrolyte body. At least one of the measurement gas-exposed electrode and the reference gas-exposed electrode is located at a distance of 3mm to 10mm from a contact of the heater with the inner surface of the solid electrolyte body in a lengthwise direction of the solid electrolyte body.

Specifically, when either of the measurement gas-exposed electrode or the reference gas-exposed electrode is located at a distance of 3mm or more from the contact of the heater with the inner surface of the solid electrolyte body through which the largest amount of thermal energy is transmitted from the heater to the solid electrolyte body, it serves to avoid overheating of a sensing area which is defined by an overlap between the measurement gas-exposed electrode and the reference gas-exposed electrode through the solid electrolyte body and produces a sensor output, thereby ensuring the stability of the sensor output insensitive to the thermal energy produced by the heater.

When either of the measurement gas-exposed electrode or the reference gas-exposed electrode is located at a distance of 10mm or less from the contact.of the heater with the inner surface of the solid electrolyte body, it enables the heater to heat the sensing area up to an activation temperature required to produce a correct output.

In the preferred mode of the invention, the at least one of the measurement gas-exposed electrode and the reference gas-exposed electrode may be located at a distance of 5mm or more from the contact of the heater with the inner surface of the solid electrolyte body in the lengthwise direction of the solid electrolyte body.

According to the second aspect of the invention, there is provided a gas sensor element which comprises: (a) a cup-shaped solid electrolyte body having a length with a closed top end, the solid electrolyte body having defined therein an air chamber into which surrounding air is admitted as a reference gas; (b) a heater installed within the air chamber of the solid electrolyte body, the heater being designed to be electrically energized to heat the solid electrolyte body; (c) a measurement gas-exposed electrode affixed to an outer surface of the solid electrolyte body which is to be exposed to a gas to be measured; and (d) a reference gas-exposed electrode affixed to the inner surface of the solid electrolyte body which is to be exposed to the air admitted into the air chamber as the reference gas. At least one of the measurement gas-exposed electrode and the reference gas-exposed electrode is located at a distance of 3mm to 10mm from a tip of the top end of the solid electrolyte body in a lengthwise direction of the solid electrolyte body.

Specifically, when either of the measurement gas-exposed electrode or the reference gas-exposed electrode is located 3mm or more away from the tip of the top end of the solid electrolyte body which is to be subjected to intense heat produced by the gas to be measured in use of the gas sensor element, it serves to avoid overheating of a sensing area which is defined by an overlap between the measurement gas-exposed electrode and the reference gas-exposed electrode through the solid electrolyte body and produces a sensor output, thereby ensuring the stability of the sensor output insensitive to the thermal energy produced by the gas.

When either of the measurement gas-exposed electrode or the reference gas-exposed electrode is located 10mm or less away from the tip of the top end of the solid electrolyte body, it enables the sensing area to be heated up to an activation temperature required to produce a correct output.

In the preferred mode of the invention, the at least one of the measurement gas-exposed electrode and the reference gas-exposed electrode may be located 5mm or more away from the tip of the top end of the solid electrolyte body in the lengthwise direction of the solid electrolyte body.

According to the third aspect of the invention, there is provided a gas sensor which comprises: (a) a sensor element; and (b) a heater. The sensor element includes a cup-shaped solid electrolyte body having a length with a closed top end, a measurement gas-exposed electrode, and a reference gas-exposed electrode. The solid electrolyte body has defined therein an air chamber into which surrounding air is admitted as a reference gas. The measurement gas-exposed electrode is affixed to an outer surface of the solid electrolyte body which is to be exposed to a gas to be measured. The reference gas-exposed electrode is affixed to an inner surface of the solid electrolyte body which is to be exposed to the air admitted into the air chamber. The heater is installed within the air chamber of the solid electrolyte body. The heater is designed to be electrically energized to heat the solid electrolyte body. At least one of the measurement gas-exposed electrode and the reference gas-exposed electrode occupies an area of the solid electrolyte body where a maximum temperature in use of the gas sensor element falls within a range of 300°C to 850°C.

Specifically, when either of the measurement gas-exposed electrode or the reference gas-exposed electrode is located on the area of the solid electrolyte body where the maximum temperature is 850°C or less, it means that a sensing area, which is defined by an overlap between the measurement gas-exposed electrode and the reference gas-exposed electrode through the solid electrolyte body and produces a sensor output, is separated away from a heat source whose temperature exceeds an upper limit of a permissible temperature range of the sensing area, thus avoiding overheating of the sensing area to ensure the stability of the sensor output.

When either of the measurement gas-exposed electrode or the reference gas-exposed electrode is located on the area of the solid electrolyte body where the maximum temperature is 300°C or more, it ensures reaching of the sensing area to an activation temperature required to produce a correct sensor output.

### BRIEF DESPCRIPTION OF THE DRAWINGS

The present invention will be understood more fully from the detailed description given hereinbelow and from the accompanying drawings of the preferred embodiments of the invention, which, however, should not be taken to limit the invention to the specific embodiments but are for the purpose of explanation and understanding only.

In the drawings:
Fig. 1 is a longitudinal sectional view which shows a structure of a gas sensor according to the first embodiment of the invention;
Fig. 2 is a partially enlarged sectional view which shows a top portion of a sensor element installed in the gas sensor of Fig. 1;
Fig. 3 is a side view which shows an outside structure of a sensor element installed in the gas sensor of Fig. 1;
Fig. 4 is a longitudinal sectional view which shows an inside structure of the sensor element of Fig. 3;
Fig. 5 is a graph which demonstrates a relation between a portion of the sensor element of Figs. 4 and 5 and a temperature thereof;
Fig. 6 is a partially enlarged sectional view which shows a top portion of a sensor element according to the second embodiment of the invention;
Fig. 7 is a partially enlarged sectional view which shows a modification of the sensor element in Fig. 6;
Fig. 8 is a partially enlarged sectional view which shows a top portion of a sensor element according to the third embodiment of the invention;
Fig. 9 is a partially enlarged sectional view which shows the first modification of the sensor element in Fig. 8;
Fig. 10 is a partially enlarged sectional view which shows the second modification of the sensor element in Fig. 8;
Fig. 11 is a graph which demonstrates levels of outputs of sensor element test samples in terms of a distance between a tip of a solid electrolyte body and top ends of a measurement gas-exposed electrode and a reference gas-exposed electrode;
Fig. 12 is a side view which shows an outside structure of a sensor element according to the fourth embodiment of the invention;
Fig. 13 is a longitudinal sectional view which shows an inside structure of the sensor element of Fig. 12; and
Fig. 14 is a graph which demonstrates levels of outputs of a sensor element according to the fifth embodiment of the invention in terms of the temperature of a sensing area of the sensor element.

### DESCRIPTION OF THE PREFERRED EMBODIMENTS

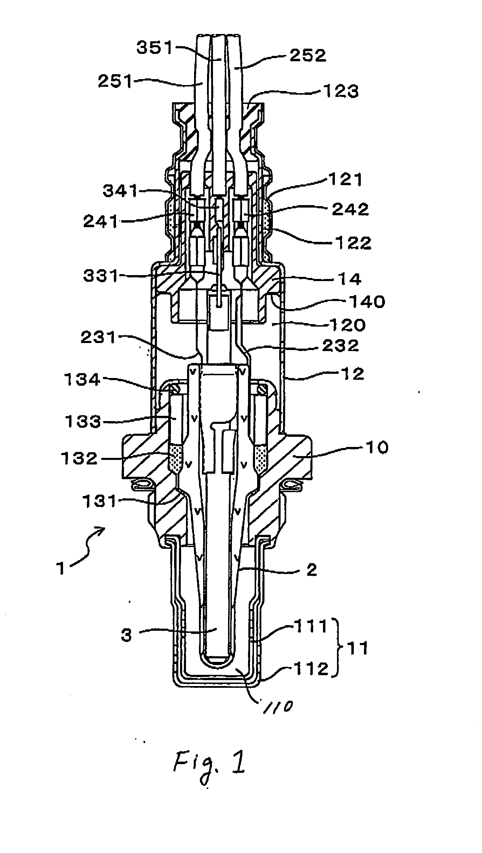

Referring to the drawings, wherein like reference numbers refer to like parts in several views, particularly to Fig. 1, there is shown a gas sensor 1 according to the first embodiment of the invention which may be installed in an exhaust pipe of an automotive internal combustion engine to measure the concentration of a given component such as O₂ contained in exhaust emissions for controlling an air-fuel ratio of a mixture supplied to the engine.

The gas sensor 1 includes a hollow cylindrical housing 10, a sensor element 2 disposed within the housing 10, a protective cover assembly 11 joined to a top end (i.e., a lower end, as viewed in the drawing) of the housing 10 to surround a top portion of the sensor element 2, and an air cover 12 joined to a base end (i.e., an upper end, as viewed in the drawing) of the housing 10 to surround a base portion of the sensor element 10.

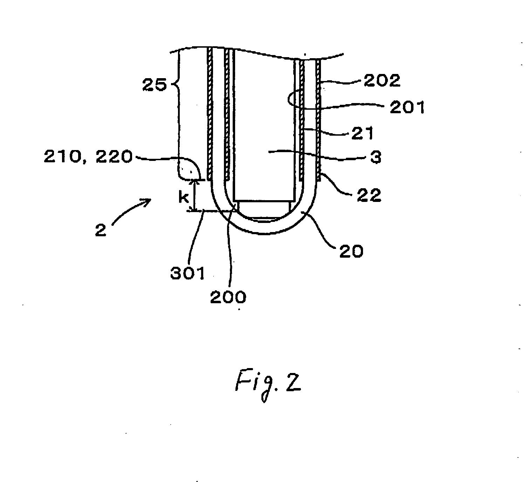

The sensor element 2, as clearly shown in Fig. 2, includes a cup-shaped solid electrolyte body 20, a measurement gas-exposed electrode 22, and a reference gas-exposed electrode 21. The solid electrolyte body 20 has a domed top and defines therein an air chamber 200 which is to be filled with air used as a reference gas when the gas sensor 1 is in use. The measurement gas-exposed electrode 22 is affixed to an outer surface 202 of the solid electrolyte body 20 and to be exposed to a gas to be measured. The reference gas-exposed electrode 21 is affixed to an inner surface 201 of the solid electrolyte body 20 and exposed to the air chamber 200. A heater 3 is installed inside the solid electrolyte body 20 in abutment of a top corner thereof with an inner surface of the top end of the solid electrolyte body 20 and exposed to the air chamber 200. The heater 3 is supplied with electric power to heat the sensor element 2 up to a desired activation temperature.

A distance *K* between an edge, as denoted at numeral 301, of an interface of the top corner of the heater 3 with the inner surface 201 of the solid electrolyte body 20 which is closest to the base end of the solid electrolyte body 20 and top ends of the measurement gas-exposed electrode 22 and the reference gas exposed-electrode 21 is selected to fall within a range of 3mm to 10mm, preferably 5mm to 10mm. The thickness of the measurement gas-exposed electrode 22 and the reference gas-exposed electrode 21 is not limited to a specific value.

Referring back to Fig. 1, the sensor element 2 is retained within the housing 10 in abutment with an annular seat formed on an inner wall of the housing 10 through a gasket 131. The protective cover assembly 11 is, as described above, affixed to the top end of the housing 10 and has a double-walled structure made up of an inner cover 111 and an outer cover 112. The inner cover 111 defines therein a measurement gas chamber 110 into which a gas to be measured is admitted. The air cover 12 is, as described above, joined to the base end of the housing 10 and defines therein an air chamber 120 into which the air to be used as the reference gas is admitted.

A powder seal 132 is disposed within a cylindrical chamber defined by the outer wall of the sensor element 2 and the inner wall of the housing 10 and forms a gas/liquid tight seal therebetween. A cylindrical insulating seal 133 is also disposed within the chamber in abutment with the powder seal 132. The insulating seal 133 is urged elastically in a downward direction, as viewed in Fig. 1, by the base end of the housing 10 through an annular ring 134. Specifically, the pressure, as produced by bending or crimping the base end of the housing 10 inwardly, constantly acts on the insulating seal 133 and the ring 134 to compress the powder seal 132 to establish the gas/liquid tight seal between the sensor element 2 and the housing 10.

The air cover 12 is surrounded by an outer cover 121. The outer cover 121 is affixed to a small-diameter portion of the air cover 12. Such affixing is achieved by crimping the outer cover 121, thereby also retaining a water-repellent filter 122 inside the outer cover 121.

A cylindrical porcelain insulator 14 is retained by a disc spring 140 within the air cover 12.

The sensor element 2, as described above, includes the cup-shaped solid electrolyte body 20, the measurement gas-exposed electrode 22, and the reference gas-exposed electrode 21. The measurement gas-exposed electrode 22 is, as clearly shown in Fig. 2, affixed to the outer surface 202 of the solid electrolyte body 20 and to be exposed to a gas to be measured. The reference gas-exposed electrode 21 is affixed to the inner surface 201 of the solid electrolyte body 20 and exposed to the air chamber 200. The heater 3 which is made of a ceramic bar is installed inside the solid electrolyte body 20 in abutment of the top end thereof with the inner surface 201 of the solid electrolyte body 20.

A contact terminal 231, as illustrated in Fig. 1, is in contact with a base end of the inner surface 201 of the sensor element 2 and holds the peripheral surface of the heater 3. The contact terminal 231 is electrically connected at a base end thereof to a lead 251 through a connector terminal 241 within the insulating porcelain 14. The lead 251 extends outside the gas sensor 1 and connects with an external sensor controller (not shown).

A contact terminal 232 is in contact with a base end of the outer surface 202 of the sensor element 2 and electrically connects at a base end thereof to a lead 252 through a connector terminal 242 within the insulating porcelain 14. The lead 252 extends outside the gas sensor 1 and connects with the external sensor controller (not shown).

An output of the sensor element 2 is transmitted to the sensor controller through the contact terminals 231 and 232, the connector terminals 241 and 242, and the lead 251 and 252.

The heater 3 has installed therein a heating element (not shown) which is energized upon supply of electric power from the sensor controller. The heater 3 has affixed thereto a pair of leads 331 (only one is shown for brevity of illustration) which lead to the heating element. The leads 331 connect with leads 351 through connector terminals 341 within the porcelain insulator 14. The leads 351 extend outside the gas sensor 1 and connect with the sensor controller for supplying the electric power to the heating element of the heater 3.

The leads 251, 252 and 351 are retained within a rubber bush 123 which is fitted in the base end of the air cover 12.

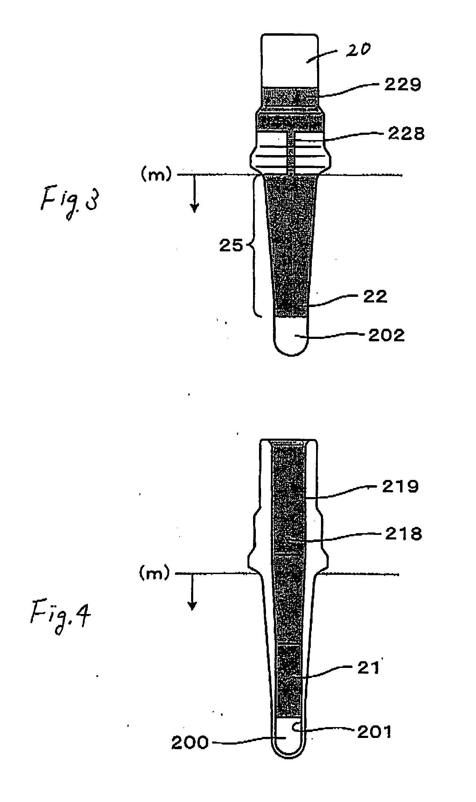

The measurement gas-exposed electrode 22, as can be seen from Fig. 3, occupies an area of the outer surface 202 of the solid electrolyte body 20 other than a top end portion thereof. The sensor element 2 is, as can be seen from Fig. 1, exposed to the gas chamber 110 within a range from the tip thereof to the gasket 131. The measurement gas-exposed electrode 22 is, therefore, formed only on an area of the solid electrolyte body 20 extending from a line *m*, as illustrated in Fig. 3, on which the solid electrolyte body 20 is placed in abutment with the gasket 131 toward the top end thereof. An electrode contact 229 is affixed to an area of the solid electrolyte body 20 separated from the line m toward the base end thereof and connected electrically to the contact terminal 232. The electrode contact 229 is coupled with the measurement gas-exposed electrode 22 through a narrow lead 228.

The solid electrolyte body 20, as clearly shown in Fig. 4, has affixed to the inner surface 201 thereof the reference gas-exposed electrode 21, an electrode contact 219, and a lead 281 connecting between the reference gas-exposed electrode 21 and the electrode contact 219. The reference gas-exposed electrode 21 occupies only an area of the inner surface 202 which extends from the line m on which the solid electrolyte body 20 is placed in abutment with the gasket 131 downward, as viewed in the drawing, except a top end area of the inner surface 202. The electrode contact 219 occupies an area of the inner surface 201 on the base end side of the line *m*. For production efficiency purposes, the reference gas-exposed electrode 21, the electrode contact 219, and the lead 281 are made of a single layer formed over an entire circumference of the inner surface 201.

Referring back to Fig. 2, the heater 3 is, as already described, placed within the air chamber 200 in abutment with the inner surface 201 of the solid electrolyte body 20. Specifically, the heater 3 has the top corner abutting the inner surface 201. The measurement gas-exposed electrode 22 and the reference gas-exposed electrode 21 have top ends 220 and 210 which substantially coincide with each other in a radius direction of the solid electrolyte body 20. The top ends 210 and 220 are located at the distance K from the contact edge 301 of the heater 3 in a lengthwise direction of the solid electrolyte body 20.

The measurement gas-exposed electrode 22 and the reference gas-exposed electrode 21 face each other through the wall of the solid electrolyte body 20 to define a sensing area 25 of the sensor element 2. The sensing area 25 is, thus, located at the distance *K* from the contact edge 301. The distance K is in a range of 3mm to 10mm, preferably 5mm to 10mm.

We performed tests on the gas sensor 1, as discussed below.

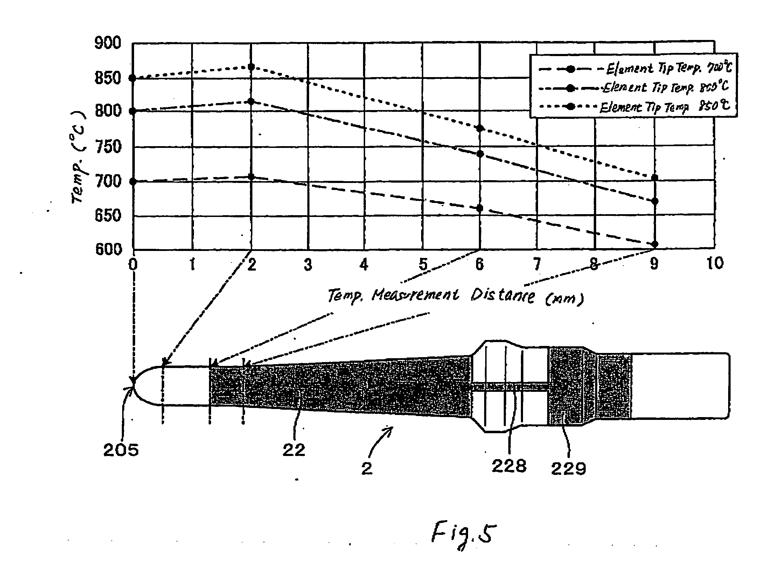

First, the gas sensor 1 was installed in an exhaust system of an automotive engine. The engine was started to expose the gas sensor 1 to exhaust gases at 600°C. The heater 3 was energized to heat the top end portion of the sensor element 2 up to selected temperatures. The temperatures of portions of the outer surface 202 of the solid electrolyte body 20 and an outer surface of the measurement gas-exposed electrode 22 of the sensor element 2 were measured. Results of the measurements are shown in a graph of Fig. 5. The ordinate axis indicates the temperatures that were measured. The abscissa axis indicates points where the temperatures were measured, as expressed in distances from the tip 205 of the sensor element 2 in an axial direction thereof. The gas sensor 1, as used in the tests, has the contact edge 301 of the heater 3 located at a distance of 2mm from the tip 205 of the sensor element 2 in the axial direction thereof.

The graph shows that the temperature of the gas sensor 2 becomes the highest at the contact edge 301 of the heater 3 placed in abutment with the inner surface 201 of the solid electrolyte body 20 and drops as approaching the base end of the solid electrolyte body 20. It is also found that even when the temperature of the tip 205 of the sensor element 2 is as high as 850°C, that of a portion of the sensor element 2 located 5mm away from the tip 205 toward the base end thereof is below 800°C.

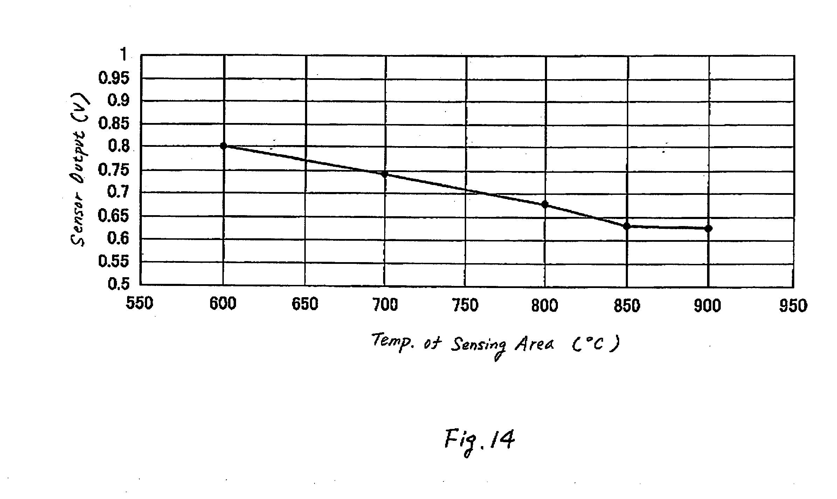

We also measured, as discussed later in detail with reference to Fig. 14, a relation between an output of the gas sensor 1 and the temperature of the sensing area 25. The graph of Fig. 14 shows that a desired level of an output of the sensor element 2 is obtained when the temperature of the sensing area 25 lies within a range of less than 800°C.

From the above results of the measurements, as demonstrated in Figs. 5 and 14, we have found that in order to avoid overheating of the sensing area 25 of the gas sensor 2 to ensure the stability of output of the gas sensor 1, it is preferable to locate the measurement gas-exposed electrode 22 and the reference gas-exposed electrode 21 at an interval of 3mm or more away from the contact edge 301 through which the greatest amount of thermal energy is transferred from the heater 3 to the solid electrolyte body 20.

We have also found that heating the sensing area 25 of the sensor element 2 up to an activation temperature required to ensure a desired degree of sensitivity to the gas to be measured is achieved by selecting the distance K between the measurement gas-exposed electrode 22 and the reference gas-exposed electrode 21 and the contact edge 301 to be less than or equal to 10mm.

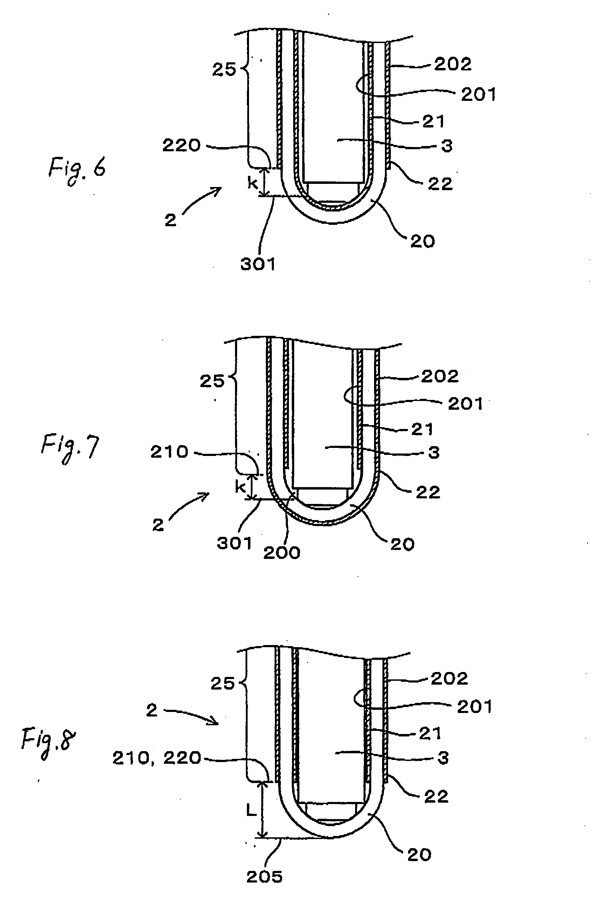

Fig. 6 shows the sensor element 2 according to the second embodiment of the invention.

The reference gas-exposed electrode 21 reaches the tip of the inner surface 201 of the solid electrolyte body 20. The measurement gas-exposed electrode 22 is, like the first embodiment, located at the distance *K* (i.e., 3mm to 10mm) from the contact edge 301 of the heater 3. The sensing area 25 is, like the first embodiment, located at the distance *K* from the contact edge 301 of the heater 3. This structure also serves to avoid the overheating of the sensing area 25 to ensure the stability of output of the gas sensor 1 free from the heat produced by the heater 3. Other arrangements are identical with those in the first embodiment, and explanation thereof in detail will be omitted here.

Fig. 7 shows a modification of the sensor element 2 of the second embodiment. The measurement gas-exposed electrode 22 reaches the tip of the outer surface 202 of the solid electrolyte body 20, while the reference gas-exposed electrode 21 is, like the first embodiment, located at the distance K (i.e., 3mm to 10mm) from the contact edge 301 of the heater 3. The sensing area 25 is, like the first embodiment, separated at the distance *K* from the contact edge 301 of the heater 3. This structure also serves to avoid the overheating of the sensing area 25 to ensure the stability of output of the gas sensor 1 free from the heat produced by the heater 3. Other arrangements are identical with those in the first embodiment, and explanation thereof in detail will be omitted here.

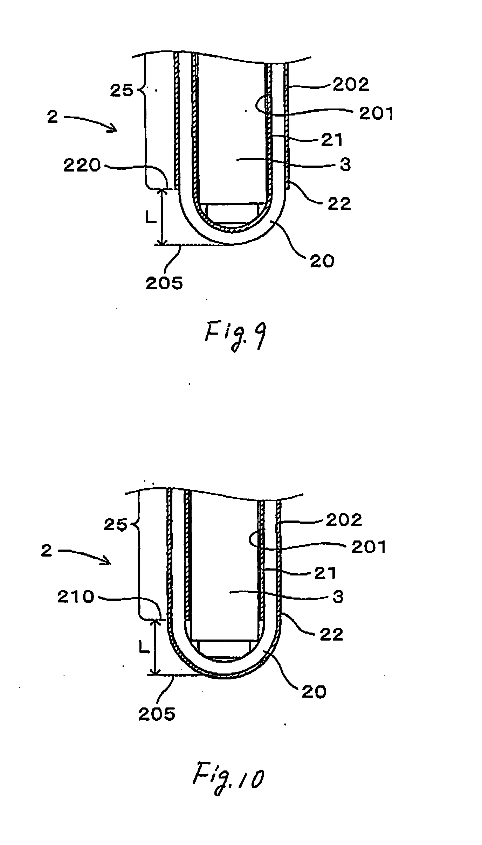

Fig. 8 shows the sensor element 2 according to the third embodiment of the invention.

The reference gas-exposed electrode 21 and the measurement gas-exposed electrode 22 have the top ends 210 and 220 located at a distance L of 3mm to 10mm, preferably 5mm to 10mm from the tip 205 of the solid electrolyte body 20 in the axial direction of the sensor element 2. The sensing area 25 of the sensor element 2 defined by the reference gas-exposed electrode 21 and the measurement gas-exposed electrode 22 opposed to each other in the radius direction of the sensor element 2 is also located at the distance L from the tip 205 of the solid electrolyte body 20. Other arrangements are identical with those in the first embodiment, and explanation thereof in detail will be omitted here.

We performed tests to evaluate a relation between the distance L and a level of an output of the gas sensor 1 equipped with the sensor element 2 of the third embodiment in the following manner.

We prepared a comparative sample of the gas sensor 1 in which the reference gas-exposed electrode 21 and the measurement gas-exposed electrode 22 extended to the tip 205 of the solid electrolyte body 20 and samples of the gas sensor 1 in which the distance L between the top ends 210 and 220 and the tip 205 of the solid electrolyte body 20 is 3mm, 5mm, 6mm, 7mm, and 9mm. We installed each of the samples in an exhaust system of an automotive engine. The engine was started to expose the sample to exhaust gases at 600°C. The heater 3 was energized to heat the top end portion of the sensor element 2 up to selected temperatures of 600°C to 900°C. The output of the sample was measured. Results of the measurements are shown in a graph of Fig. 11.

An air-fuel mixture in the engine as used in the above tests was a little rich, so that each sample produced an output indicative of richness of the mixture. A controller used for the type of the gas sensor 1 usually has a sensor output measurable range of 0.6V or more, preferably 0.65V or more in a rich region. It is, thus, found from the graph of Fig. 11 that the samples having the distance L of 3mm or more work to produce outputs within the above sensor output measurable range.

From the above results of the tests, we have found that the gas sensor 1 in which the reference gas-exposed electrode 21 and the measurement gas-exposed electrode 22 are located 3mm or more from the tip 205 of the solid electrolyte body 20 which is usually subjected to the intense heat of exhaust gas of the engine is suitable for avoiding the overheating of the sensing area 25 to ensure the stability of output of the gas sensor 1.

We have also found that heating the sensing area 25 of the sensor element 2 up to an activation temperature required to ensure a desired degree of sensitivity to the gas to be measured is achieved by selecting the distance *L* to be less than or equal to 10mm.

Fig. 9 shows a modification of the sensor element 2 of the third embodiment, as illustrated in Fig. 8.

The reference gas-exposed electrode 21 reaches the tip of the inner surface 201 of the solid electrolyte body 20. The measurement gas-exposed electrode 22 is, like the third embodiment, located at the distance L (i.e., 3mm to 10mm) from the tip 205 of the solid electrolyte body 20. The sensing area 25 is, like the third, separated at the distance L from the tip 205 of the solid electrolyte body 20. Other arrangements are identical with those in the first embodiment, and explanation thereof in detail will be omitted here.

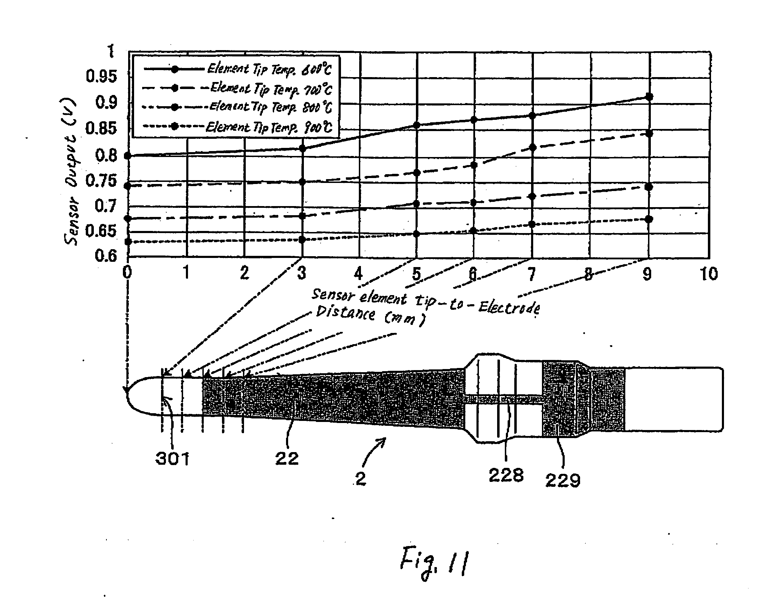

Fig. 10 shows a second modification of the sensor element 2 of the third embodiment. The measurement gas-exposed electrode 22 reaches the tip 205 of the outer surface 202 of the solid electrolyte body 20, while the reference gas-exposed electrode 21 is, like the third embodiment, located at the distance L (i.e., 3mm to 10mm) from the tip 205. The sensing area 25 is located at the distance L from the tip 205 of the solid electrolyte body 20. Other arrangements are identical with those in the first embodiment, and explanation thereof in detail will be omitted here.

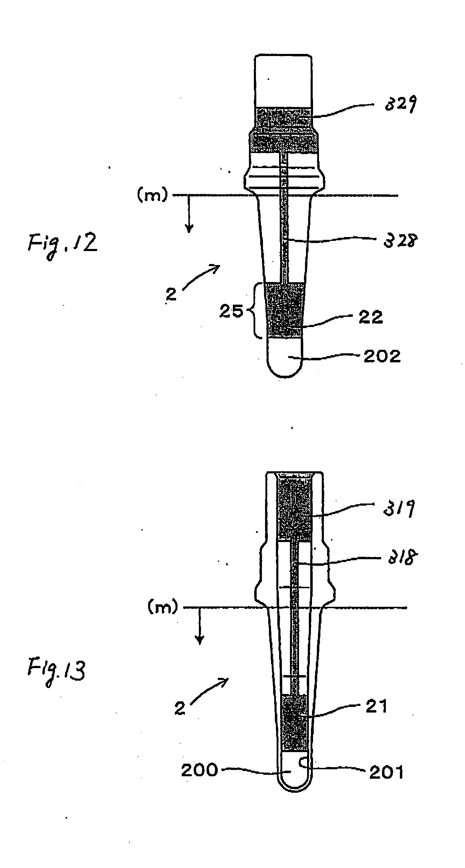

Figs. 12 and 13 show the sensor element 2 according to the fourth embodiment of the invention.

The measurement gas-exposed electrode 22 has a length much shorter than that of the one in the first embodiment, as illustrated in Fig. 3. Specifically, the measurement gas-exposed electrode 22 is, as can be seen from fig. 12, separated greatly from the line m on which the solid electrolyte body 20 is placed in abutment with the gasket 131. An electrode contact 329 is affixed to an area of the outer surface 202 of the solid electrolyte body 20 separated from the line *m* to the base end thereof and connected electrically to the contact terminal 232. The electrode contact 329 is coupled with the measurement gas-exposed electrode 22 through a narrow, long lead 328.

The reference gas-exposed electrode 21 has a length much shorter than that of the one in the first embodiment, as illustrated in Fig. 4. Specifically, the reference gas-exposed electrode 21 is, as can be seen from fig. 13, separated greatly from the line m. An electrode contact 319 is affixed to an area of the inner surface 201 of the solid electrolyte body 20 separated from the line m to the base end thereof and connected electrically to the contact terminal 232. The electrode contact 319 is coupled with the reference gas-exposed electrode 21 through a narrow, long lead 318.

The reference gas-exposed electrode 21 and/or the measurement gas-exposed electrode 22 of this embodiment may be located either at the distance K (i.e. 3mm to 10mm, preferably 5mm to 10mm) from the contact edge 301 of the heater 3 or the distance L (i.e., 3mm to 10mm, preferably 5mm to 10mm) from the tip 205 of the solid electrolyte body 20.

Other arrangements are identical with those in the first embodiment, and explanation thereof in detail will be omitted here.

The sensor element 2 according to the fifth embodiment will be described below.

We prepared the gas sensor 1 equipped with the sensor element 2 substantially identical in structure with the one in the first embodiment and measured a relation between an output of the gas sensor 1 and the temperature of the sensing area 25 in the following manner.

The gas sensor 1 was installed in an exhaust system of an automotive engine. The engine was started to expose the sensor element 2 to exhaust gases at 600°C. The heater 3 was energized to heat the top end portion of the sensor element 2 up to selected temperatures of 600°C to 900°C. The output of the gas sensor 1 was measured. Results of the measurements are shown in the graph of Fig. 14.

An air-fuel mixture in the engine as used in the above test was a little rich, so that the gas sensor 1 produced an output as a function of richness of the mixture. A controller used for the type of the gas sensor 1 usually has a sensor output measurable range of 0.6V or more, preferably 0.65V or more in a rich region. It is, thus, found from the graph of Fig. 14 that it is advisable to design the sensor element 2 which has the sensing area 25 (i.e., an overlap between the reference gas-exposed electrode 21 and the measurement gas-exposed electrode 22 through the solid electrolyte body 20) defined so as to produce a required level of a sensor output within a maximum temperature range below 850°C. If the temperature of the sensing area 25 is below 300°C, a difficulty may be encountered in heating the sensing area 25 up to a desired activation temperature. It is, thus, advisable that the sensing area 25 be located where a maximum temperature thereof in use of the gas sensor 1 falls within a range of 300°C to 850°C.

While the present invention has been disclosed in terms of the preferred embodiments in order to facilitate better understanding thereof, it should be appreciated that the invention can be embodied in various ways without departing from the principle of the invention. Therefore, the invention should be understood to include all possible embodiments and modifications to the shown embodiments witch can be embodied without departing from the principle of the invention as set forth in the appended claims.

An improved structure of a gas sensor is provided which is designed to ensure the stability of a sensor output insensitive to thermal energy added to a sensor element. The sensor element has a sensing area located where a correct sensor output is produced free from heat added to the sensor element.

## Claims

1. A gas sensor comprising:
a sensor element including a cup-shaped solid electrolyte body having a length with a closed top end, a measurement gas-exposed electrode, and a reference gas-exposed electrode, said solid electrolyte body having defined therein an air chamber into which surrounding air is admitted as a reference gas, the measurement gas-exposed electrode being affixed to an outer surface of the solid electrolyte body which is to be exposed to a gas to be measured, the reference gas-exposed electrode being affixed to an inner surface of said solid electrolyte body which is to be exposed to the air admitted into the air chamber; and
a heater installed within the air chamber of the solid electrolyte body of said sensor element in contact with the inner surface of said solid electrolyte body, said heater being designed to be electrically energized to heat said solid electrolyte body,
wherein at least one of said measurement gas-exposed electrode and said reference gas-exposed electrode is located at a distance of 3mm to 10mm from a contact of said heater with the inner surface of said solid electrolyte body in a lengthwise direction of said solid electrolyte body.

2. A gas sensor element as set forth in claim 1, wherein the at least one of said measurement gas-exposed electrode and said reference gas-exposed electrode is located at a distance of 5mm or more from the contact of said heater with the inner surface of said solid electrolyte body in the lengthwise direction of said solid electrolyte body.

3. A gas sensor element comprising:
a cup-shaped solid electrolyte body having a length with a closed top end, said solid electrolyte body having defined therein an air chamber into which surrounding air is admitted as a reference gas;
a heater installed within the air chamber of said solid electrolyte body, said heater being designed to be electrically energized to heat said solid electrolyte body;
a measurement gas-exposed electrode affixed to an outer surface of said solid electrolyte body which is to be exposed to a gas to be measured; and
a reference gas-exposed electrode affixed to the inner surface of said solid electrolyte body which is to be exposed to the air admitted into the air chamber as the reference gas,
wherein at least one of said measurement gas-exposed electrode and said reference gas-exposed electrode is located at a distance of 3mm to 10mm from a tip of the top end of said solid electrolyte body in a lengthwise direction of said solid electrolyte body.

4. A gas sensor element as set forth in claim 3, wherein the at least one of said measurement gas-exposed electrode and said reference gas-exposed electrode is located at a distance of 5mm or more from the tip of the top end of said solid electrolyte body in the lengthwise direction of said solid electrolyte body.

5. A gas sensor comprising:
a sensor element including a cup-shaped solid electrolyte body having a length with a closed top end, a measurement gas-exposed electrode, and a reference gas-exposed electrode, said solid electrolyte body having defined therein an air chamber into which surrounding air is admitted as a reference gas, the measurement gas-exposed electrode being affixed to an outer surface of the solid electrolyte body which is to be exposed to a gas to be measured, the reference gas-exposed electrode being affixed to an inner surface of said solid electrolyte body which is to be exposed to the air admitted into the air chamber; and
a heater installed within the air chamber of said solid electrolyte body, said heater being designed to be electrically energized to heat said solid electrolyte body,
wherein at least one of said measurement gas-exposed electrode and said reference gas-exposed electrode occupies an area of said solid electrolyte body where a maximum temperature in use of the gas sensor element falls within a range of 300 to 850°C.
